# EUROPEAN PATENT APPLICATION

(11) **EP 4 775 022 A1**
(43) Date of publication of application: **15.07.2026**
(21) Application number: 24861875.3
(22) Date of filing: 28.08.2024
(51) Int. Cl.: A01D 75/00, A01D 34/00

(54) **LAWN MOWER**

(30) Priority: 06.09.2023 CN 202322424681 U; 06.09.2023 CN 202322424964 U
(71) Applicant: Greenworks (Jiangsu) Co., Ltd, Changzhou, Jiangsu 213023 (CN)
(72) Inventor: CAO, Jin, hangzhou, Jiangsu 213023 (CN); GAO, Jie, hangzhou, Jiangsu 213023 (CN)
(74) Representative: Bergenstråhle & Partners AB
(86) International application number: PCT/CN2024/114993
(87) International publication number: WO 2025/051031

(57) **Abstract**

A mower includes a body, a walking wheel assembly, and a vision assembly. The walking wheel assembly is disposed on two sides of the body. The vision assembly is disposed on a top of the body. Wherein, the vision assembly includes a camera and a lighting device, and the camera and the lighting device are both inclined towards a ground and form an angle between 30° and 50° with a horizontal direction.

## Description

### TECHNICAL FIELD

The disclosure relates to a robotic mower, which belongs to a technical field of garden tools.

### BACKGROUND

A robotic mower is a machine for the maintenance of a landscaped areas or lawn. The robotic mower includes a vision assembly, and the vision assembly includes accessories such as a camera and is configured to automatically identify a working area.

In the conventional art, the vision assembly can only accurately identify the working area when the light is sufficient, and it is difficult for the vision assembly to accurately identify the working area when the light is dim, which results in that the robotic mower cannot work normally.

In addition, the top of the casing of the robotic mower usually includes a flip cover structure, so that the user can view or repair the internal structure by opening the flip cover without disassembling the casing, and the operation is more convenient and faster.

However, when the flip cover is opened, the flip cover is easily affected by an external force. For example, the flip cover is automatically closed under the action of wind blowing or the gravity of the flip cover itself, which will bring poor user experience to the user.

In view of this, it is necessary to improve the conventional robotic mower to solve the above problems.

### SUMMARY

The disclosure provides a robotic mower, and the robotic mower includes a camera and a lighting device. When a light is dim, the lighting device may provide illumination so as to ensure that a vision assembly can accurately perform identification.

One or more embodiments of the disclosure provide the robotic mower, and the robotic mower includes a body, a walking wheel and the vision assembly.

The walking wheel assembly is disposed on two sides of the body.

The vision assembly is disposed at a top of the body.

Wherein, the vision assembly includes a camera and a lighting device, and the camera and the lighting device are both inclined towards a ground and form an angle between 30° and 50° related to a horizontal direction.

As an improvement of the disclosure, the angle of the camera tilting toward the ground is the same as the angle of the lighting device tilting toward the ground.

As an improvement of the disclosure, the lighting device is a light bead, a control board is disposed inside the body, and the light bead is mounted on the control board and controlled by the control board.

As an improvement of the disclosure, the vision assembly further includes a sensor operatively coupled to the control board, and the sensor is arranged close to the camera and is configured to detect brightness of an external environment and transmit detected data to the control board.

As an improvement of the disclosure, the control board turn on the light bead, when the robotic mower is in a working state and the sensor detects that the brightness of the external environment is lower than a preset value.

As an improvement of the disclosure, the robotic mower further includes an RTK antenna and a radar, the RTK antenna is disposed on a top of the body and located behind the camera, the radar is disposed on a front side of the body and located below the camera, and the camera, the RTK antenna, and the radar are all covered by the body.

As an improvement of the disclosure, the body includes a chassis and a casing, the casing covers the chassis and is fixedly coupled to the chassis, the walking wheel assembly is disposed on two sides of the chassis, and the vision assembly is disposed on the body and is exposed from an opening at a top of the casing.

As an improvement of the disclosure, the vision assembly further includes a bracket, the bracket is vertically disposed within the body, a bottom end of the bracket is fixedly coupled to the chassis, a top end of the bracket extends beyond the casing, and the casing includes an opening hole for the top end of the bracket to pass through.

As an improvement of the disclosure, the bracket includes a post, a fixing part and a positioning structure.

The fixing part protrudes from a top end of the post toward a front side of the robotic mower.

The positioning structure extends horizontally from a top end of the post toward a rear side of the robotic mower.

The camera is fixed at a middle position of the fixing part, the lighting device is also fixed on the fixing part and located on two sides of the camera, the radar is fixed on the fixing part and located below the lighting device, and the RTK antenna is fixed on the positioning structure.

As an improvement of the disclosure, the fixing part includes a first fixing plate, a first fixing component, a second fixing component and a second fixing plate. The first fixing component and the second fixing component are respectively located at two sides of the first fixing plate and are cantilevered horizontally from the first fixing plate. The second fixing plate is located below the first fixing plate. A positioning block is disposed on a side of the second fixing plate proximate to the post, the camera is disposed on the first fixing plate and is clamped and fixed by the positioning block, the lighting device is clamped and fixed by the first fixing component and the second fixing component, and the radar is disposed on the second fixing plate.

Beneficial effects of the disclosure are: in the robotic mower of the disclosure, the camera and the lighting device located on two sides of the camera are disposed on a front side of the top of the body, so that when the light is dim, the lighting device can provide illumination to ensure that the vision assembly can accurately identify a working area when the robotic mower walks. In addition, through arranging both the camera and the lighting device to be inclined toward the ground and forming the angle between 30° and 50° with the horizontal direction, it can be ensured that the lighting device can accurately illuminate the working area.

The disclosure further provides a casing structure. This casing structure can limit the flip cover to be passively flipped by an external force when it is in the open state or the closed state, which improves the user experience. Specifically, the casing structure includes a base cover and a flip cover. The base cover includes a limiting part and an upper end surface. The limiting part protrudes downward from an inner wall surface of the base cover. The flip cover includes a connecting part. The flip cover is rotatably coupled to the base cover along the pivot rotating shaft via the connecting part. Wherein, a first limiting groove and a second limiting groove are disposed at a position of the connecting part proximate to the pivot rotating shaft, when the limiting part is received and retained in the first limiting groove, the flip cover is in a closed state, the flip cover is maintained parallel to the upper end surface of the base cover. When the limiting part is received and retained in the second limiting groove, the flip cover is in an open state, and the flip cover rotates to be substantially perpendicular to the upper end surface of the base cover and is maintained in a fixed position.

As an improvement of the disclosure, the first limiting groove and the second limiting groove are both formed through being concave inward from an outer wall surface of the connecting part, and the first limiting groove and the second limiting groove are spaced apart from each other.

As an improvement of the disclosure, the connecting part includes a connecting hole, and the pivot rotating shaft extends through the connecting hole and is fixedly coupled to the base cover, such that the flip cover is rotatable about the pivot rotating shaft.

As an improvement of the disclosure, the limiting part includes a limiting protrusion, and the first limiting groove and the second limiting groove are disposed around a periphery of the connecting hole, such that the limiting bump is switchable between the first limiting groove and the second limiting groove when the flip cover rotates about the pivot rotating shaft.

As an improvement of the disclosure, the flip cover includes a cover plate, the connecting part is bent and extends downward from one end of the cover plate such that the first limiting groove and the second limiting groove are located proximate to the cover plate, when the flip cover is in the closed state, the cover plate is coplanar with the upper end surface of the base cover, and when the flip cover is in the open state, the cover plate is perpendicular to the base cover.

As an improvement of the disclosure, the base cover includes a first mounting position and bearing structures located on two sides of the first mounting position, the bearing structures are configured to bear the flip cover, at least one abutment post is disposed on a side of the cover plate facing the base cover, and when the flip cover is in the closed state, the at least one abutment post abuts against at least one of the bearing structures.

One or more embodiments of the disclosure provide the robotic mower with the casing structure mentioned above.

The disclosure provides the robotic mower. The robotic mower includes the casing structure, and the casing structure includes the base cover and the flip cover. The base cover includes the limiting part and the upper end surface. The limiting part is formed through protruding downward from an inner wall surface of the base cover. The flip cover includes the connecting part. The flip cover is rotatably coupled to the base cover along the pivot rotating shaft through the connecting part. Wherein, the first limiting groove and the second limiting groove are disposed at the position of the connecting part proximate to the pivot rotating shaft, when the limiting part is received and retained in the first limiting groove, the flip cover is in the closed state, the flip cover is kept parallel to the upper end surface of the base cover. When the limiting part is received and retained in the second limiting groove, the flip cover is in the open state, and the flip cover rotates to be substantially perpendicular to the upper end surface of the base cover and kept fixed.

As an improvement of the disclosure, the robotic mower further includes a detection assembly, the detection assembly is configured to detect obstacles in a traveling direction of the robotic mower. A second mounting position is disposed on a side of the base cover away from the flip cover, and the detection assembly is mounted in the second mounting position. The detection assembly includes a detection radar and the camera.

As an improvement of the disclosure, the robotic mower further includes a cutting assembly, the cutting assembly is configured to mow. The robotic mower further includes the chassis, the chassis is fixedly connected to the casing structure, the cutting assembly is movably connected to the chassis, and the cutting assembly can be lifted and lowered relative to the chassis.

As an improvement of the disclosure, the flip cover includes a third mounting position, the robotic mower further includes a switch assembly, and the switch assembly is mounted in the third mounting position and configured to control the robotic mower to start and stop.

The disclosure has following beneficial effects: in the casing structure of the disclosure, through arranging the limiting part protruding downward on the inner wall surface of the base cover and arranging the first limiting groove and the second limiting groove on the flip cover at the same time, when the flip cover is in the closed state or the open state, the limiting part may be used to be cooperated with the corresponding limiting groove to enable the flip cover in the corresponding closed state or open state, so as to limit the flip cover from flipping due to an influence of an external force, thereby improving user's experience.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a perspective view of a robotic mower of the disclosure.
FIG. 2 is a side view of a robotic mower in FIG. 1.
FIG. 3 is a schematic structural view of a robotic mower in FIG. 1 with a casing removed.
FIG. 4 is a side view of FIG. 3.
FIG. 5 is a partial enlarged view of a vision assembly in FIG. 4.
FIG. 6 is a perspective structural view of a vision assembly in FIG. 3.
FIG. 7 is an exploded view of a vision assembly in FIG. 6.
FIG. 8 is a perspective structural view of a robotic mower according to at least one embodiment of the disclosure.
FIG. 9 is a structural exploded view of a robotic mower in FIG. 8.
FIG. 10 is a perspective structural view of a casing structure in FIG. 8.
FIG. 11 is a cross-section view of a casing structure in FIG. 10.
FIG. 12 is an enlarged view of a part in a circle in FIG. 11.
FIG. 13 is a perspective structural view of a flip cover in FIG. 10.
FIG. 14 is a perspective structural view of a flip cover in FIG. 13 from another angle.
FIG. 15 is a perspective structural view of a base cover in FIG. 10.
FIG. 16 is a perspective structural view of a base cover in FIG. 15 from another angle.

### DETAILED DESCRIPTION

To enable objectives, technical solutions, and advantages of the disclosure to be clearer, the following describes the disclosure in detail with reference to the accompanying drawings and specific embodiments.

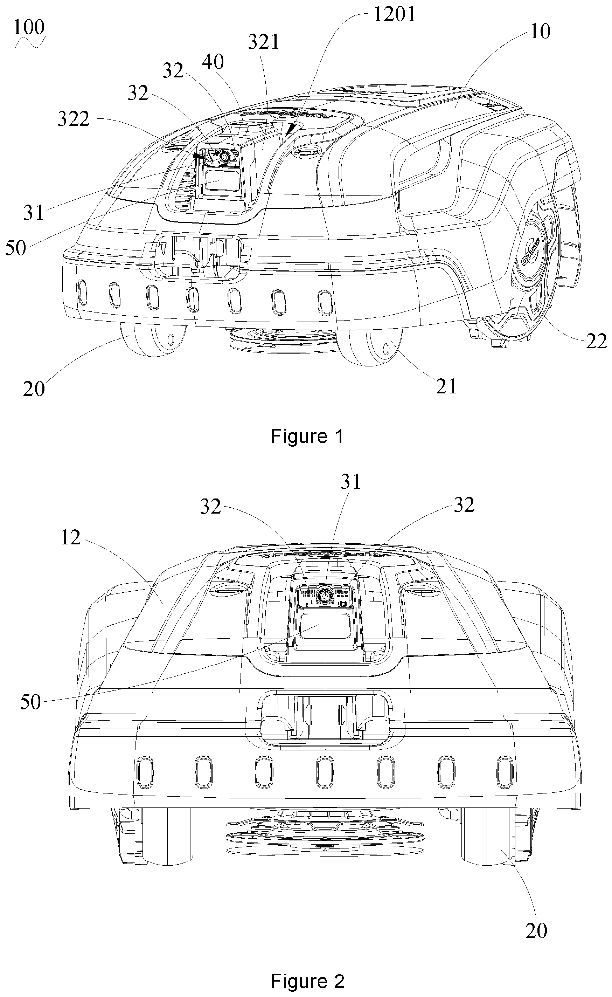

Please refer to FIG. 1 through FIG. 3, the disclosure provides a robotic mower 100. The robotic mower 100 includes a body 10, a walking wheel assembly 20 and a vision assembly 30. Wherein the walking wheel assembly 20 is disposed on two sides of the body 10 for driving the robotic mower 100. The vision assembly 30 is disposed on a front side of the top of the body 10 for automatically identifying a working area when the robotic mower 100 walks.

The body 10 includes a chassis 11 and a casing 12, the casing covers the chassis 11 and is fixedly coupled to the chassis 11, the walking wheel assembly 20 is disposed on two sides of the chassis 11, and the vision assembly 30 is disposed on the body 10 and exposed from an opening at a top of the casing 12.

The walking wheel assembly 20 includes a pair of front walking wheels 21 and a pair of rear walking wheels 22, and the pair of front walking wheels 21 and the pair of rear walking wheels 22 are used for driving the robotic mower 100, and can also support the robotic mower 100 at the same time. The front walking wheel 21 is a universal wheel, the rear walking wheel is a driving wheel, and the robotic mower 100 drives the robotic mower 100 to move through the driving wheel, and performs steering through the universal wheel. At least part of the driving wheel and the universal wheel protrude below the casing, so that the robotic mower 100 may pass more easily. At the same time, a wheel diameter of the driving wheel is greater than a wheel diameter of the universal wheel, so as to improve a walking stability of the robotic mower 100. Of course, a specific structure of the walking wheel assembly 20 may adopt conventional technical solutions, which will not be described in detail here.

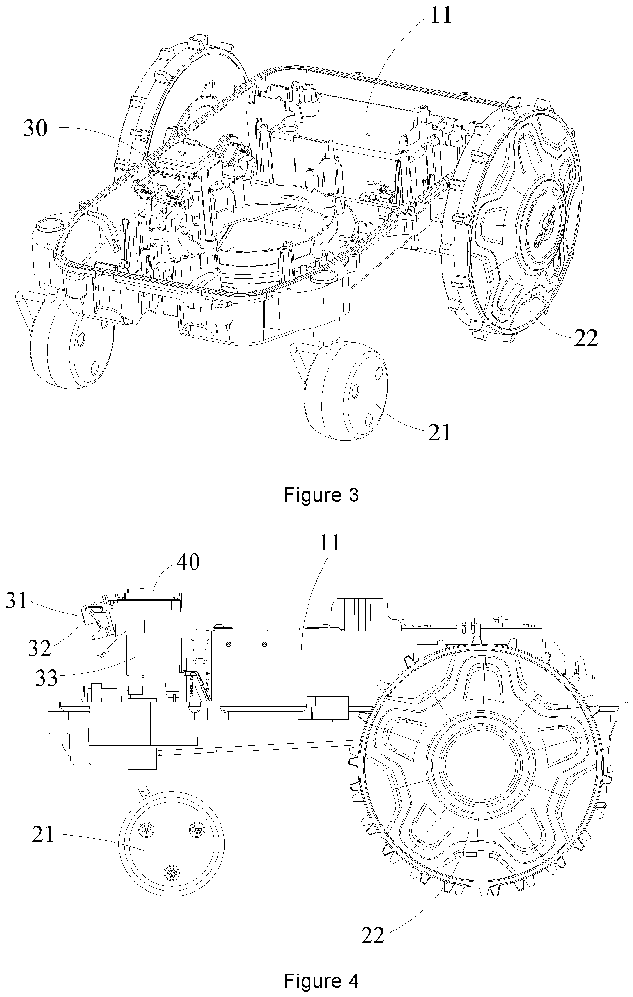

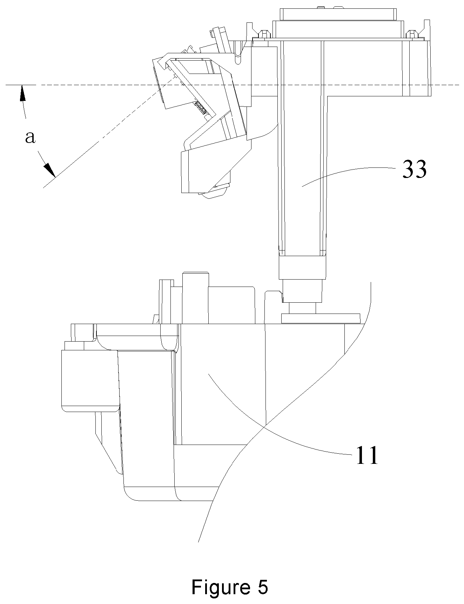

Please refer to FIG. 3 through FIG. 5. The vision assembly includes a camera 31 and a lighting device 32 located at two sides of the camera 31, and the camera 31 and the lighting device 32 are both inclined towards a ground and form an angle between 30° and 50° with a horizontal direction (the angle a shown in FIG. 5). It may be understood that a height of the lighting device 32 is higher than a height of an opening 1201 at the top of the casing 12, and at the same time the lighting device 32 is disposed on the two sides of the camera 31, so that the two sides of the camera 31 can be supplemented with light, thereby ensuring that the camera 31 can accurately capture the working area in front. The camera 31 and the lighting device 32 are disposed to be inclined toward the ground, so as to prevent the lighting device 32 from affecting the user, and a downward capture range of the camera 31 can be increased. In some embodiments, the angle of the camera 31 tilting toward the ground is the same as the angle of the lighting device 32 tilting toward the ground, which are both 40°. A lighting effect is best at this time.

It may be understood that a glass is further disposed at a front end of the camera 31, and the glass can protect the camera 31 from impact and can also achieve a dustproof and waterproof effect.

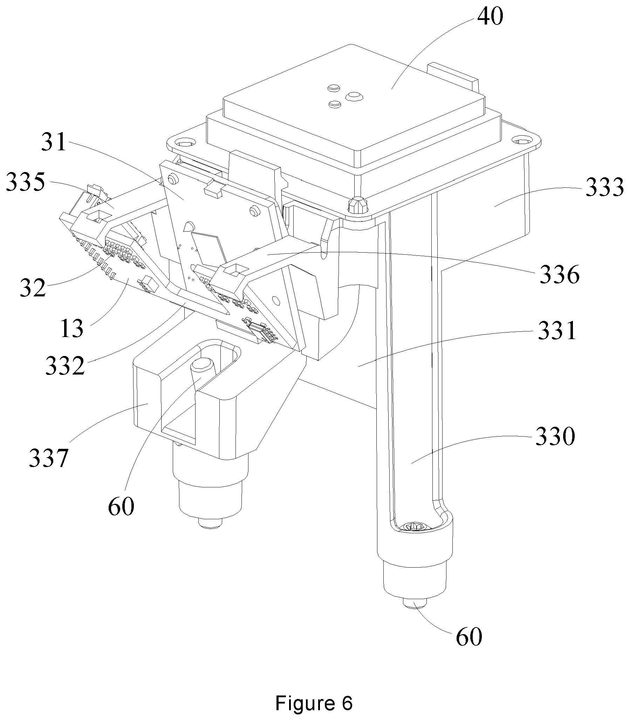

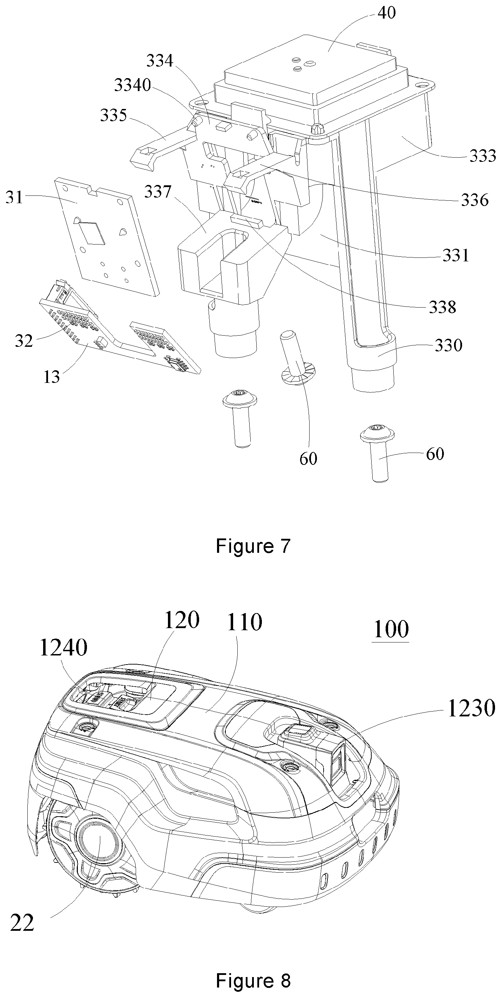

Please refer to FIG. 6 and FIG. 7. The lighting device 32 is a light bead, a control board 13 is disposed inside the casing 12, and the light bead is mounted in an array on the control board 13 and controlled by the control board 13. The vision assembly 30 further includes a sensor operatively coupled to the control board 13, and the sensor is disposed proximate to the camera 31 and is configured to detect brightness of an external environment and transmit detected data to the control board 13, so that the control board 13 controls the light beads to be lit up.

The sensor is disposed proximate to the camera 31, so that a brightness of the external environment can be better sensed. Of course, in other embodiments, the sensor may also be disposed at other positions, as long as it is convenient to sense the brightness of the external environment, which is not limited here.

When the robotic mower 100 is in a working state and the sensor detects that the brightness of the external environment is lower than a preset value, the control board 13 turn on the light bead to illuminate the working area in front. The "the robotic mower 100 is in the working state" herein includes that the robotic mower 100 is in a normal walking state and a mowing state, and also includes a state of pausing in the working area and a state of returning to a base station for charging, which is not limited here.

The sensor is a conventional sensor, and can send different signals according to different detected brightness, so that the control board 13 sends different instructions to control the light beads to be turned on or off.

Please refer to FIG. 1 and FIG. 2. The robotic mower 100 further includes an RTK antenna 40 and a radar 50, the RTK antenna 40 is disposed on a top of the casing 12 and located behind the camera 31, the radar 50 is disposed on a front side of the casing 12 and located below the camera 31, and the camera 31, the RTK antenna 40, and the radar 50 are all covered by the body to prevent rain and dust from damaging the camera 31, RTK antenna 40, and radar 50.

The RTK antenna 40 is configured to receive a satellite signal and a signal sent by an RTK base station, so as to position a current location of the robotic mower 100. The radar 50 is configured to detect obstacles in the working area to ensure that the robotic mower 100 can walk normally. In other words, both the camera 31 and the radar 50 supplement RTK navigation.

Please refer to FIG. 6 and FIG. 7. The vision assembly 30 further includes a bracket 33, the bracket 33 is vertically disposed in the body 10, a bottom end of the bracket 33 is fixedly coupled to the chassis 11, a top end of the bracket 33 extends beyond the casing 12, and the casing 12 includes an opening hole for the top end of the bracket 33 to pass through. In other words, the camera 31, the lighting device 32, the RTK antenna 40, and the radar 50 are all fastened to the body 10 through the bracket 33.

The bracket 33 includes a post 331, a fixing part 332 protruding from a top of the post 331 toward a front side of the robotic mower 100, and a positioning structure 333 extending horizontally from the top of the post 331 toward a rear side of the robotic mower 100. The camera 31 is fixed at a middle position of the fixing part 332, the lighting device 32 is also fixed on the fixing part 332 and located on two sides of the camera 32, the radar 50 is fixed on the fixing part 332 and located below the lighting device 32, and the RTK antenna 40 is fixed on the positioning structure 333.

The post 331 includes two fixing legs 330, and the two fixing legs 330 are fixedly coupled to the chassis 11 through screws 60, so that the bracket 33 can be stably disposed on the chassis 11.

The fixing part 332 includes a first fixing plate 334, a first fixing component 335, a second fixing component 336 and a second fixing plate 337. The first fixing component 335 and the second fixing component 336 are respectively located on two sides of the first fixing plate 334 and are horizontally cantilevered from the first fixing plate 334. The second fixing plate 337 is located below the first fixing plate 334, and a positioning block 338 is disposed on a side of the second fixing plate 337 proximate to the post 331. The camera 31 is disposed on the first fixing plate 334 and clamped and fixed by the positioning block 338, the lighting device 32 is clamped and fixed by the first fixing component 335 and the second fixing component 336, and the radar 50 is disposed on the second fixing plate 337.

Since the camera 31 and the lighting device 32 need to be inclined toward the ground, the first fixing plate 334 is correspondingly disposed to be inclined, a top end of the camera 31 is fixedly connected to a positioning post 3340 at a top of the first fixing plate 334, and a bottom end of the camera 31 is limited between the positioning block 338 and the first fixing plate 334, so as to realize a fixing of the camera 31. Since the lighting device 32 is disposed on the control board 13, a top end of the control board 13 is buckled by the first fixing component 335 and the second fixing component 336, and the bottom end of the control board 13 is disposed proximate to the radar 50 and fixed above the radar 50. The radar 50 is fixed on the second fixing plate 337 through the screw 60.

Of course, structures for fixing the camera 31, the lighting device 32, and the radar 50 may alternatively be other structures, which are not limited here.

A hollow protruding part 321 extending upward is formed on the chassis 11, and the vision assembly 30, the RTK antenna 40 and the radar 50 are mounted in the protruding part 321. The protruding part 321 includes a light transmission hole 322, and a height of the light transmission hole 322 is lower than a height of the lighting device 32, so that light of the lighting device 32 is inclined downward. In an embodiment of the disclosure, a height of a lowest part of the lighting device 32 is higher than a height of a highest part of the light transmission hole 322.

In summary, in the robotic mower 100 of the disclosure, the camera 31 and the lighting device 32 located on two sides of the camera are disposed on the front side of the top of the body 10, so that when the light is dim, the lighting device 32 can provide illumination to ensure that the vision assembly 30 can accurately identify the working area when the robotic mower 100 walks. In addition, through arranging both the camera 31 and the lighting device 32 to be inclined toward the ground and forming the angle between 30° and 50° with the horizontal direction, it can be ensured that the lighting device 32 can accurately illuminate the working area. Compared with the prior art, the robotic mower 100 of the disclosure not only improves working efficiency of the camera 31, but also enhances the mowing efficiency of the robotic mower, allowing the robotic mower to work at any time.

Please refer to FIG. 8 through FIG. 9. The casing 12 of the robotic mower 100 includes a flip cover 120, and the flip cover 120 is pivotally mounted on the casing 12 and may be opened for a convenience of the user to operate. The casing 12 may be applied to the robotic mower 100 in this embodiment or other tools, which is not limited in this disclosure.

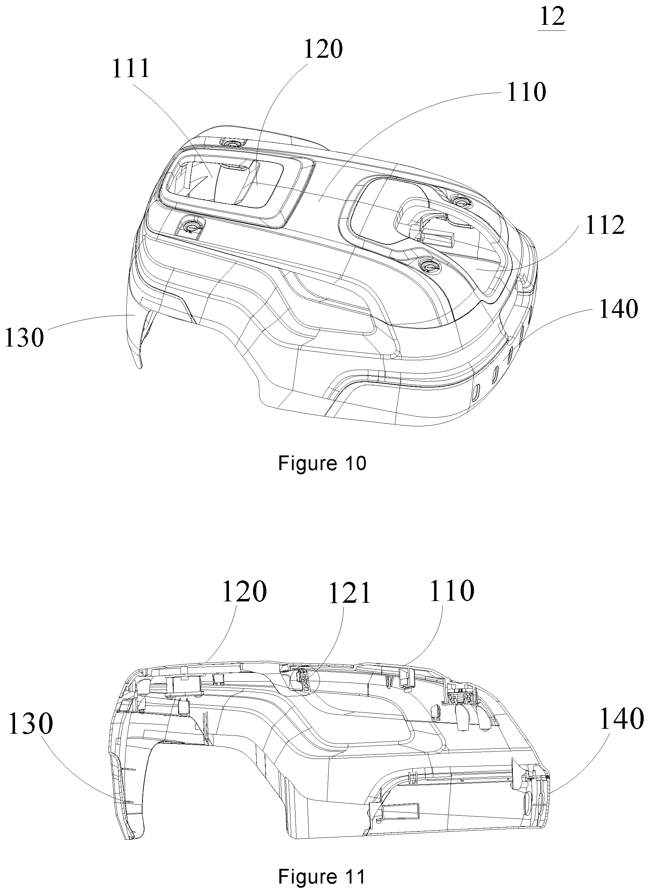

Please refer to FIG. 10 through FIG. 12. The casing 12 includes a base cover 110 and a flip cover 120. The base cover 110 includes a limiting part 115 and an upper end surface 114. The limiting part 115 protrudes downward from an inner wall surface 116 of the base cover 110. The flip cover 120 includes a connecting part 121. The flip cover 120 is rotatably coupled to the base cover 110 along the pivot rotating shaft through the connecting part. Wherein, a first limiting groove 1211 and a second limiting groove 1212 are disposed at a position of the connecting part 121 near the pivot rotating shaft. When the limiting part 115 is received and retained in the first limiting groove 1211, the flip cover 120 is in a closed state, the flip cover 120 is kept parallel to the upper end surface 114 of the base cover 110. When the limiting part 115 is received and retained in the second limiting groove 1212, the flip cover 120 is in an open state, and the flip cover 120 rotates to be substantially perpendicular to the upper end surface of the base cover 110 and is maintained in a fixed position.

When the flip cover 120 is in the open state, even if the flip cover 120 is affected by an external force such as wind blowing or gravity of the flip cover 120, since the limiting part 115 is received and retained in the second limiting groove 1212, the flip cover 120 is also prevented from flipping open inadvertently, and may be better maintained in the open state, which is convenient for the user to operate and brings better use experience. Meanwhile, the first limiting groove 1211 can also enable the flip cover 120 to be closed more tightly when in the closed state, and cannot easily be popped open even if there is a bump.

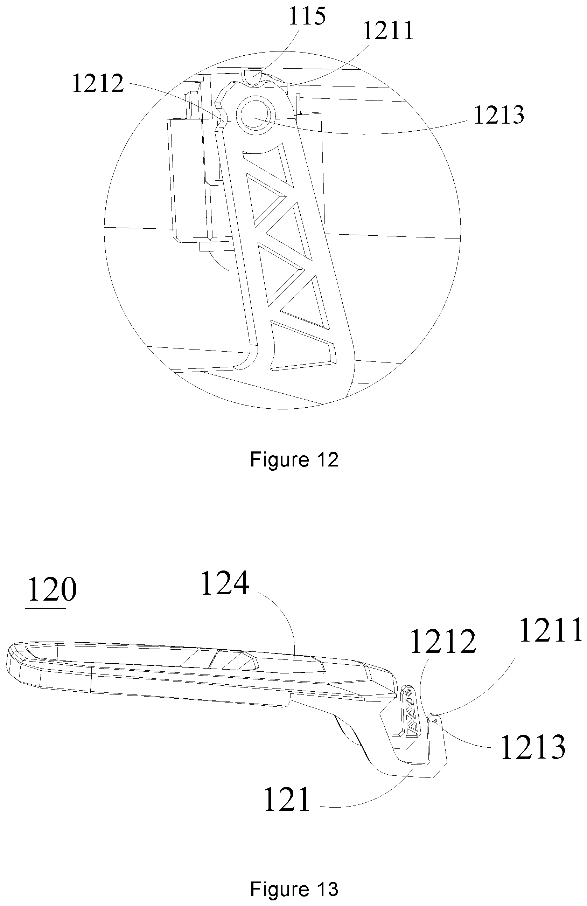

Please refer to FIG. 12. The first limiting groove 1211 and the second limiting groove 1212 are both formed through being concave inward from an outer wall surface of the connecting part 121, and the first limiting groove 1211 and the second limiting groove 1212 are spaced apart from each other. The first limiting groove 1211 and the second limiting groove 1212 are both integrally formed, which is more convenient to mount.

The connecting part 121 includes a connecting hole 1213, and the pivot rotating shaft extends through the connecting hole 1213 and is fixedly coupled to the base cover 110, so that the flip cover 120 rotates about the base cover 110 with the pivot rotating shaft as a rotating shaft. A connecting structure is simple, and an assembly and a disassembly are quick and convenient.

In this embodiment, the limiting part 115 is a limiting protrusion, and the first limiting groove 1211 and the second limiting groove 1212 are disposed around a periphery of the connecting hole 1213, such that the limiting bump is switchable between the first limiting groove 1211 and the second limiting groove 1212 when the flip cover 120 rotates about the pivot rotating shaft. The limiting part 115 of a limiting protrusion structure can better cooperate with the first limiting groove 1211 and the second limiting groove 1212 to limit a rotation of the flip cover 120. In other embodiments, the limiting part 115 may also be other structures, which is not limited in the disclosure.

Please refer to FIG. 13 through FIG. 14. The flip cover 120 includes a cover plate 124, the connecting part 121 is bent and extends downward from one end of the cover plate 124 to enable the first limiting groove 1211 and the second limiting groove 1212 to be proximate to the cover plate 124. When the flip cover 120 is in the closed state, the cover plate 124 is coplanar with the upper end surface 114 of the base cover. When the flip cover 120 is in the open state, the cover plate 124 is perpendicular to the base cover 110.

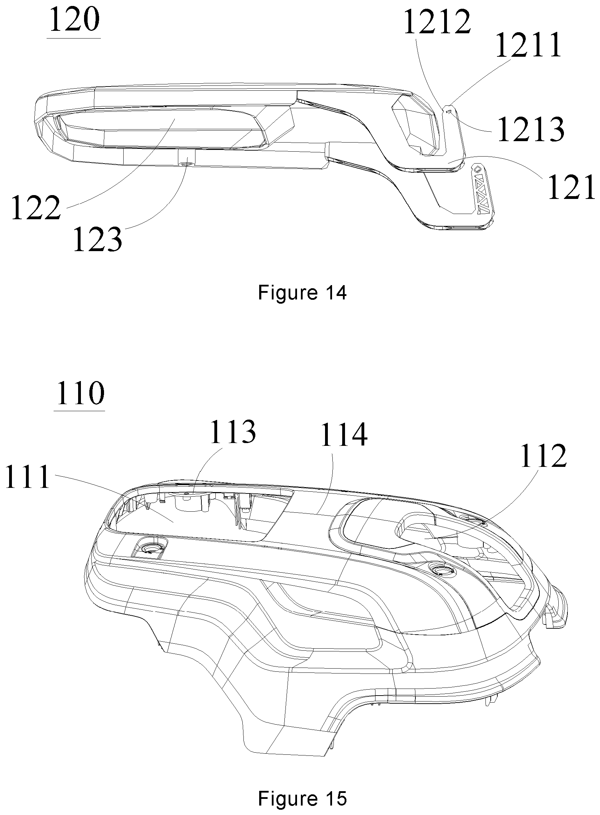

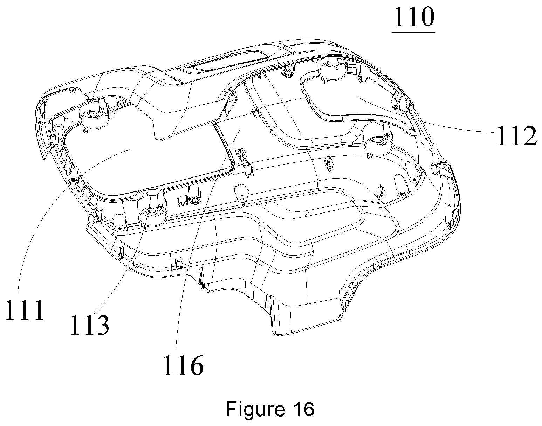

Please refer to FIG. 15 through FIG. 16. The base cover 110 includes a first mounting position 111 and bearing structures 113. The bearing structures are located on two sides of the first mounting position 111. The bearing structures 113 are configured to bear the flip cover 120. The flip cover 120 includes the cover plate 124, abutment posts 123 are disposed on two sides of the cover plate 124 facing the base cover 110. When the flip cover 124 is in the closed state, the abutment posts 123 abut against the bearing structures 113. The cover plate 124 is sized to match the first mounting position 111. When the cover plate 124 is coplanar with the upper end surface 114 of the base cover 110, the cover plate 124 covers the first mounting position 111. In order to prevent the cover plate 124 from overflipping and also in order to reduce a weight borne by the connecting part 121, the bearing structures 113 extend inward on the two sides of the first mounting position 111, the abutment posts 123 of the cover plate 124 abut against the bearing structures 113, and the bearing structures 113 provides stable support for the cover plate 124.

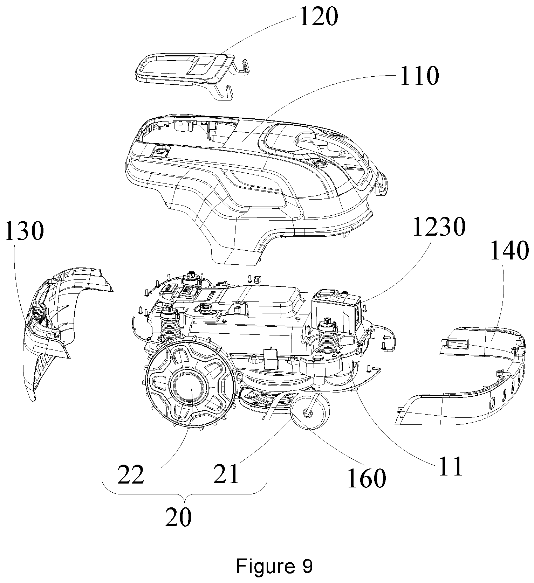

Please refer to FIG. 9. The casing 12 further includes a front cover 140 and a rear cover 130, and both the front cover 140 and the rear cover 130 are clamped with the base cover 110, to better protect an internal structure of the robotic mower 100, which improves aesthetics of the robotic mower 100, and bring better visual experience.

The robotic mower 100 further includes a cutting assembly 160 to mow. The casing 12 further includes the chassis 11, the chassis 11 is fixedly connected to the casing 12, the cutting assembly 160 is movably connected to the chassis 11, and the cutting assembly 160 may be lifted and lowered relative to the chassis 11. In order to handle uneven ground and obstacles, the cutting assembly 160 in the robotic mower 100 is configured to be lifted and lowered relative to the chassis 11, so that the robotic mower 100 can better adapt to terrain, which has a better obstacle crossing capability, and ensures a better mowing effect.

The robotic mower 100 further includes a detection assembly 1230, the detection assembly 1230 is configured to detect obstacles in a traveling direction of the robotic mower 100. A second mounting position 112 is disposed on a side of the base cover 110 near the driving wheel 22, and the detection assembly 1230 is mounted in the second mounting position 112. The detection assembly includes the radar and the camera mentioned above. In order to better detect a road condition when the robotic mower 100 is walking autonomously, the robotic mower 100 includes the detection assembly 1230. The second mounting position 112 disposed at the same time facilitates a mounting of the detection assembly 1230, and the equipped detection radar and camera can take more information of traveling paths, so that a walking of the robotic mower 100 is more intelligent.

The robotic mower 100 includes a switch assembly 1240, so as to facilitate controlling a start and stop of the robotic mower 100 through the switch assembly 1240. A third mounting position 122 is disposed in the cover plate 124, and the switch assembly 1240 is directly mounted in the third mounting position 122, so that even when the cover plate 124 covers the first mounting position 111, the user may directly touch the switch assembly 1240 without opening the flip cover 120 each time the switch assembly 1240 is touched, which is more convenient to operate. At the same time, compared with a case where the switch assembly 1240 protrudes from the upper end surface 114 of the base cover 110, the switch assembly 1240 can be better protected by this arrangement herein.

In summary, in the casing 12 of the disclosure, through arranging the limiting part 115 protruding downward on the inner wall surface 116 of the base cover 110 and arranging the first limiting groove 1211 and the second limiting groove 1212 on the flip cover 120 at the same time, when the flip cover 120 is in the closed state or the open state, the limiting part 115 may be used to be cooperated with the corresponding limiting groove to enable the flip cover 120 in the corresponding closed state or open state, so as to limit the flip cover 120 from flipping due to an influence of an external force, thereby improving user's experience.

## Claims

1. A robotic mower, comprising:
a body;
a walking wheel assembly disposed on two sides of the body; and
a vision assembly disposed at a top of the body;
wherein the vision assembly comprises a camera and a lighting device, and both the camera and the lighting device are inclined downward towards a ground, each forming an angle between 30° and 50° related to a horizontal direction.

2. The robotic mower according to claim 1, wherein, the angle of the camera tilting downward toward the ground is the same as the angle of the lighting device tilting downward toward the ground.

3. The robotic mower according to claim 1, wherein, the lighting device is a light bead, a control board is disposed inside the body, and the light bead is mounted on the control board and controlled by the control board.

4. The robotic mower according to claim 3, wherein, the vision assembly further comprises a sensor operatively coupled to the control board, and the sensor is arranged close to the camera and is configured to detect brightness of an external environment and transmit detected data to the control board.

5. The robotic mower according to claim 4, wherein the control board turn on the light bead when the mower is in a working state and the sensor detects that the brightness of the external environment is lower than a preset value.

6. The robotic mower according to claim 1, wherein the mower further comprises an RTK antenna and a radar, the RTK antenna is disposed on a top of the body and located behind the camera, the radar is disposed on a front side of the body and located below the camera, and the camera, the RTK antenna, and the radar are all covered by the body.

7. The robotic mower according to claim 6, wherein the body comprises a chassis and a casing, the casing covers the chassis and is fixedly coupled to the chassis, the walking wheel assembly is disposed on two sides of the chassis, and the vision assembly is disposed on the body and is exposed from an opening at a top of the casing.

8. The robotic mower according to claim 7, wherein, the vision assembly further comprises a bracket, the bracket is vertically disposed within the body, a bottom end of the bracket is fixedly coupled to the chassis, a top end of the bracket extends beyond the casing, and the casing comprises an opening hole for the top end of the bracket to pass through.

9. The robotic mower according to claim 8, wherein, the bracket comprises
a post;
a fixing part protruding from a top end of the post toward a front side of the robotic mower, and
a positioning structure extending horizontally from a top end of the post toward a rear side of the robotic mower,
wherein the camera is fixed at a middle position of the fixing part, the lighting device is fixed on the fixing part and located on two sides of the camera, the radar is fixed on the fixing part and located below the lighting device, and the RTK antenna is fixed on the positioning structure.

10. The robotic mower according to claim 9, wherein, the fixing part comprises
a first fixing plate;
a first fixing component and a second fixing component respectively located on two sides of the first fixing plate and cantilevered horizontally from the first fixing plate, and
a second fixing plate located below the first fixing plate,
wherein a positioning block is disposed on a side of the second fixing plate proximate to the post, the camera is disposed on the first fixing plate and is clamped and fixed by the positioning block, the lighting device is clamped and fixed by the first fixing component and the second fixing component, and the radar is disposed on the second fixing plate.

11. The robotic mower according to claim 7, wherein, the casing comprises:
a base cover comprising a limiting part and an upper end surface, the limiting part protruding downward from an inner wall surface of the base cover; and
a flip cover comprising a connecting part, the flip cover being rotatably coupled to the base cover along a pivot rotating shaft via the connecting part;
wherein a first limiting groove and a second limiting groove are disposed at a position of the connecting part proximate to the pivot rotating shaft, when the limiting part is received and retained in the first limiting groove, the flip cover is in a closed state, the flip cover is maintained parallel to the upper end surface of the base cover, and when the limiting part is received and retained in the second limiting groove, the flip cover is in an open state, and the flip cover rotates to be substantially perpendicular to the upper end surface of the base cover and is maintained in a fixed position.

12. The robotic mower according to claim 11, wherein the first limiting groove and the second limiting groove are both formed through being concave inward from an outer wall surface of the connecting part, and the first limiting groove and the second limiting groove are spaced apart from each other.

13. The robotic mower according to claim 11, wherein the connecting part comprises a connecting hole, and the pivot rotating shaft extends through the connecting hole and is fixedly coupled to the base cover such that the flip cover is rotatable about the pivot rotating shaft.

14. The robotic mower according to claim 13, wherein the limiting part comprises a limiting protrusion, and the first limiting groove and the second limiting groove are disposed around a periphery of the connecting hole such that the limiting bump is switchable between the first limiting groove and the second limiting groove when the flip cover rotates about the pivot rotating shaft.

15. The robotic mower according to claim 11, wherein the flip cover comprises a cover plate, the connecting part is bent and extends downward from one end of the cover plate such that the first limiting groove and the second limiting groove are located proximate to the cover plate, when the flip cover is in the closed state, t the cover plate is coplanar with the upper end surface of the base cover, and when the flip cover is in the open state, the cover plate is perpendicular to the base cover.

16. The robotic mower according to claim 15, wherein the base cover comprises a first mounting position and bearing structures located on two sides of the first mounting position, the bearing structures are configured to support the flip cover, at least one abutment post is disposed on a side of the cover plate facing the base cover, and when the flip cover is in the closed state, the at least one abutment post abuts against at least one of the bearing structures.
